Europäisches Patentamt

European Patent Office

Office européen des brevets

(11) Veröffentlichungsnummer: **0 398 386**

**A1**

# EUROPÄISCHE PATENTANMELDUNG

(21) Anmeldenummer: 90109621.4

(22) Anmeldetag: 21.05.90

(51) Int. Cl.⁵: **A01B 33/08, A01B 33/14**

(30) Priorität: **19.05.89 DE 3916269**

(43) Veröffentlichungstag der Anmeldung:
**22.11.90 Patentblatt 90/47**

(84) Benannte Vertragsstaaten:
**AT CH DE DK ES FR GB IT LI NL**

(71) Anmelder: **H. Niemeyer Söhne GmbH & Co.
KG
Heinrich-Niemeyer-Strasse 52, Postfach 11
65
D-4446 Hörstel(DE)**

(72) Erfinder: **Barlage, Bruno
Beethovenstrasse 13
D-4446 Hörstel(DE)**
Erfinder: **Robert, Franz-Josef
Bornholtstrasse 7
D-4446 Hörstel(DE)**
Erfinder: **Gattermann, Bernd
Eichenwall 3
D-2872 Hude 1(DE)**

(54) **Zapfwellengetriebene Kreiselegge.**

(57) Zapfwellengetriebene Kreiselegge mit einem sich quer zur Fahrtrichtung erstreckenden Kastenbalken (2), in dem mehrere Werkzeugkreisel angeordnet sind. Um mit einfachsten konstruktiven Maßnahmen eine kostengünstige Bauweise für eine Kreiselegge zu schaffen, ist vorgesehen, daß die Werkzeugkreisel (6) mittels Lager (22) drehbar angeordnet sind und einander benachbarte Werkzeugkreisel (6) über ein Stirnradgetriebe (9) im entgegengesetzten Drehsinn rotierend angetrieben sind, daß die Werkzeugkreisel (6) mittels Lager (22) drehbar angeordnet sind und einander benachbarte Werkzeugkreisel (6) über ein Stirnradgetriebe (9) im entgegengesetzten Drehsinn rotierend angetrieben sind.

Fig.5

## Zapfwellengetriebene Kreiselegge

Die Erfindung betrifft eine zapfwellengetriebene Kreiselegge gemäß dem Oberbegriff des Patentanspruchs 1.

Eine derartige Kreiselegge ist beispielsweise durch die DE-A-25 38 306 bekannt. Bei dieser Kreiselegge werden die einzelnen Werkzeugkreisel über Kegelradtriebe angetrieben. Dieser Antrieb ist relativ aufwendig und teuer.

Der Erfindung liegt die Aufgabe zugrunde, mit einfachsten konstruktiven Maßnahmen eine kostengünstige Bauweise für eine Kreiselegge zu schaffen.

Diese Aufgabe wird erfindungsgemäß durch die kennzeichnenden Merkmale des Patentanspruchs 1 gelöst. Infolge dieser Maßnahmen wird ein kostengünstiges Stirnradgetriebe für den Antrieb der mittels Lager drehbar angeordneten Werkzeugkreisel geschaffen, und zwar in der Form, daß über das Stirnradge triebe die Werkzeugkreisel im entgegengesetzten Drehsinn rotierend angetrieben werden. Diese Antriebsart für die Werkzeugkreisel einer Kreiselegge ist sehr kostengünstig und robust.

In einer äußerst vorteilhaften Weiterbildung des erfindungsgemäßen Gegenstandes ist vorgesehen, daß jeder Werkzeugkreisel mittels eines einzigen Lagers und/oder Lagerringes in dem Kastenbalken gelagert ist, welches(er) sich in einer einzigen Ebene befindet. Infolge dieser Maßnahme ergibt sich eine äußerst kostengünstige Lagerung für den Werkzeugkreisel, weil für jeden Werkzeugkreisel nur noch ein einziges Lager verwendet wird. In vorteilhafter Weise ist dieses einzige Lager an dem Kastenbalkenboden befestigt. Hierdurch ergeben sich zusätzlich vorteilhafte Montagemöglichkeiten.

Eine sehr kostengünstige Anordnung des Lagers für die Lagerung des Werkzeugkreisels ergibt sich dadurch, daß das Lager unmittelbar an und/oder in dem Außenring des Werkzeugträgers angeordnet ist. Hierdurch wird die Voraussetzung dazu geschaffen, daß in kostengünstiger Weise das Lager unmittelbar in den Außenring des Werkzeugträgers integriert werden kann.

Damit in vorteilhafter Weise bei Verwendung des erfindungsgemäßen einzigen Lagers die Kräfte gut von dem Lager aufgenommen werden können, ist erfindungsgemäß vorgesehen, daß das Lager einen großen Durchmesser aufweist, der mindestens einem Drittel des Durchmessers des Zinkenarbeitsbereiches und/oder der Hälfte des Drehachsenabstandes der einander benachbarten Werkzeugkreisel entspricht, jedoch kleiner als dieser Achsabstand ist.

Eine äußerst vorteilhafte Ausbildung des Werkzeugkreisels und der damit verbundenen vorteilhaften Integration des Lagers in den Werkzeugträger bzw. dem Kastenbalkenboden sowie eine gute Kraftübertragung wird in erfindungsgemäßer Weise dadurch erreicht, daß der Werkzeugträger topfförmig ausgebildet ist, daß an der Bodenweite oder im unteren zylinderischen Bereich des topfförmigen Werkzeugträgers die Zinken befestigt sind, daß an der Oberseite des topfförmigen Werkzeugträgers das Stirnrad des Stirnradgetriebes befestigt ist, und daß zwischen dem Stirnrad und der Zinkenbefestigung das einzige Lager angeordnet ist.

Hierbei ist dann in erfindungsgemäßer Weise vorgesehen, daß sich auf der Außenseite des topfförmigen Werkzeugträgers eine umlaufende, als Rollbahn für die Wälzkörper ausgebildete Lagerrille zur Aufnahme von Kugeln des als Kugellager ausgebildeten Lagers befindet, und daß sich in dem Boden des Kastenbalkens ebenfalls für die Lagerung jedes Werkzeugträger eine ebenfalls umlaufende Rille zur Aufnahme der Kugeln des Kugellagers angeordnet ist. Infolge dieser Maßnahmen wird das einzige, entsprechend der Erfindung vorgesehene Lager, welches zur Lagerung des Werkzeugträgers dient, unmittelbar in den Werkzeugträger und dem sich am Kastenbalkenboden befindlichen Lagerflansch integriert. Die Lagerrillen befinden sich einerseits unmittelbar in den topfförmigen Werkzeugträgern und andererseits in dem Boden des Kastenbalkens. Ein zusätzliches Lager, wie es üblicherweise sonst eingesetzt wurde, wird nicht mehr verwendet. Das Lager ist unmittelbar in den Werkzeugträger und in dem Kastenbalkenboden integriert.

Um eine einfache Montage zu ermöglichen, ist erfindungsgemäß vorgesehen, daß sich im Bereich der umlaufenden Lagerrille zumindest eine Aussparung befindet, durch welche die Kugeln für das einzige Lager einfüllbar sind, und daß diese Aussparung(en) durch einen oder mehrere einsetzbare(n) Stopfen verschließbar ist (sind). Infolge dieser Maßnahme können die für die Lagerung notwendigen Kugeln des erfindungsgemäßen Kugellagers durch diese Aussparung eingefüllt werden. Durch das Einfüllen der Kugeln durch die Aussparung in die Lagerrille wird der Werkzeugkreisel bzw. der Werkzeugträger in den Kastenbalkenboden montiert und von diesen Kugeln gehalten. Damit eine einwandfreie Funktion des Lagers gewährleistet ist, befindet sich die Aussparung zur Einfüllung der Kugel jeweils in der unbelasteten Zone der Rille. Eine vorteilhafte Anordnung der Aussparung ergibt sich dadurch, daß diese sich in der Seitenwand des topfförmigen Werkzeugträgers befindet. Es ist aber auch möglich, daß sich die Aussparung zur Einfüllung der Kugeln in das jeweilige Lager in der feststehenden Seitenwand in der Kreiselwanne des Kastenbalkens befindet. Anstelle des Stopfens zum Verschließen der Aussparung ist es auch möglich, eine sichere Anordnung der Kugeln im Lager dadurch zu gewährleisten. daß die Aussparung einen geringfügig kleineren Durchmesser als die Kugeln aufweist. Die Kugeln müssen dann durch diese Aussparung in die Lagerrille gepreßt werden.

Um in äußerst einfacher Weise die für den Antrieb der Werkzeugkreisel erforderlichen Stirnräder des Stirnradgetriebes auf den Werkzeugträgern befestigen und montieren zu können, ist erfindungsgemäß vorgesehen, daß auf der Außenseite im oberen Bereich des topfförmigen Werkzeugträgers ein umlaufendes Gewinde angeordnet ist, daß das Stirnrad des Stirnradgetriebes jeweils ebenfalls ein Gewinde aufweist, welches dem auf dem topfförmigen Werkzeugträger aufgebrachten Gewinde entspricht, so daß das Stirnrad auf den topfförmigen Werkzeugträger aufschraubbar ist. Infolge dieser Maßnahme können die Stirnräder des Stirnradgetriebes in einfacher Weise auf den topfförmigen Werkzeugträgern aufgeschraubt werden. Das jeweilige Stirnrad wird also wie eine Mutter auf eine Schraube, um einmal einen bildlichen Vergleich zu gebrauchen, auf den Werkzeugträger aufgeschraubt. Um den Antrieb der einander benachbarten Werkzeugkreisel im entgegengesetzten Drehsinn zu gewährleisten, ist erfindungsgemäß vorgesehen, daß die nebeneinander angeordneten Werkzeugträger jeweils, bezogen auf den einander entgegengesetzten Drehsinn abwechselnd Rechts- und Linksgewinde aufweisen, und daß die Stirnräder entsprechend mit Rechts- und Linksgewinde versehen sind.

Auch ist es zur einfachen Montage der Stirnräder des Stirnradgetriebes auf die Werkzeugträger möglich, daß der topfförmige Werkzeugträger auf seiner Oberseite ein Mehrkantprofil, vorzugsweise ein Vierkantprofil, zur drehfesten Aufnahme des Stirnrades des Stirnradgetriebes aufweist.

Um eine gute Paßgenauigkeit und Tragfähigkeit für das erfindungsgemäße Lager zu erreichen, ist erfindungsgemäß vorgesehen, daß für das Kugellager eine Vierpunktlagerung vorgesehen ist.

Hierbei kann das Kugellager als sog. Vollkugellager ausgebildet sein. Es ist jedoch auch möglich, daß das erfindungsgemäße Kugellager als sog. Käfiglager ausgebildet ist. Es ist ebenfalls auch möglich, an Stelle der integrierten Anordnung des Lagers in den topfförmigen Werkzeugträger und den Lagerflansch, ein separates Kugellager zwischen dem Werkzeugträger und den Kastenbalkenboden einzusetzen, wobei das Kugellager einen großen Durchmesser aufweist. Auch ist es möglich, bei der integrierten Anordnung die Lagerringe abnehmbar auszugestalten, so daß dann zunächst die Kugeln eingefüllt werden können, um anschließend nach dem Einfüllen der Kugeln die Lagerringe einzusetzen. Dieses ist eine Alternative zu der Ausbildung, bei der die Kugeln über eine Aussparung in die Lagerrille einfüllbar sind.

Des weiteren sieht die Erfindung vor, daß die Zinken als Doppelzinken ausgebildet sind und mittels zweier Schrauben an dem Werkzeugträgerboden angeschraubt sind, wobei sich in dem Werkzeugträgerboden in einem Abstand voneinander zwei Sacklöcher befinden, in welche die Schrauben zur Befestigung der Zinken eingeschraubt sind. Infolge dieser Maßnahme ergibt sich eine einfache Anordnung der Zinken an dem Werkzeugträger.

Um einerseits eine einfache Montage zu gewährleisten, sowie andererseits eine genaue und wunschgemäße Stellung der Zinken benachbarter Werkzeugkreisel zueinander zu erreichen, ist erfindungsgemäß vorgesehen, daß sowohl das Zahnrad, wie auch der Werkzeugträger ein Gewinde mit definiertem Einlauf zur definierten Zinkenstellung aufweisen.

Um eine einfache Montage der Werkzeugträger mit ihren dazugehörigen Bauteilen zu erreichen, ist in erfindungsgemäßer Weise vorgesehen, das der Werkzeugträger und der Lageraußenring als fertiges Lager vormontiert werden und als Montageeinheit in den Kastenbalkenboden befestigt oder angeflanscht werden. Diese vormontierten Montageeinheiten lassen sich dann einfach mittels Schrauben oder anderer Befestigungsmittel an den Kastenbalkenboden anflanschen. Um einen sicheren und genauen Antrieb der Werkzeugträger zu gewährleisten, ist erfindungsgemäß vorgesehen, daß die Montageeinheit durch an dem Lageraußenring befindliche Zentrierungselemente in Verbindung mit am Kastenbalkenboden angeordneten Gegenzentrierungselementen im Kastenbalken genau justiert wird.

Des weiteren ist erfindungsgemäß vorgesehen, daß jedem den Werkzeugträger im Kastenbalkenboden lagernden Lager zumindest eine Dichtung zugeordnet ist, die den Austritt von sich im Kastenbalken befindlichen Schmiermitteln verhindert und gleichzeitig die Dichtung gegen von außen eindringenden Schmutz etc. sicherstellt. Infolge dieser Maßnahme wird eine einfache Abdichtung erreicht. Eine besonders einfache Abdichtung ergibt sich dadurch, daß die Dichtung als Kunststoffen ausgebildet ist und vorzugsweise aus einem geschäumten Kunststoffmaterial besteht.

In einer besonders vorteilhaften und einfachen Ausführungsform ist in erfindungsgemäßer Weise vorgesehen, daß sich auf der Außenseite des topfförmigen Werkzeugträgers eine umlaufende, als Rollbahn für die Walzkörper ausgebildete Lagerrille zur Aufnahme von Kugeln des als Kugellager ausgebildeten Lagers befindet, daß der Lagerinnenring in dem Werkzeugträger integriert ist, und daß der Lageraußenring aus zwei in horizontaler Ebene teilbaren Hälften besteht. Infolge dieser Maßnahmen läßt sich auf einfachste Weise eine Lagerung für die im Kastenbalkenboden drehbar gelagerten Werkzeugkreisel herstellen, wobei auch die Montage des Lagers durch den teilbaren Lageraußenring sehr unkompliziert ist.

Zur Verhinderung des Einklemmens von Steinen zwischen den nebeneinander angeordneten Werkzeugkreiseln jeweils im unteren Bereich des jeweiligen Werkzeugträgers ist erfindungsgemäß vorgesehen, daß der Werkzeugträger in seinem unteren Bereich einen kreisrunden, tellerförmigen Abschluß aufweist.

Weitere Einzelheiten der Erfindung sind den übrigen Unteransprüchen, der Beispielsbeschreibung und den Zeichnungen zu entnehmen. Hierbei zeigt:

Fig. 1 - Eine erfindungsgemäß ausgebildete Kreiselegge in der Ansicht von vorne in Prinzipdarstellung.

Fig. 2 - Die Kreiselegge gemäß Fig. 1 in der Draufsicht, jedoch mit hinter den Werkzeugkreiseln angeordneter, höhenverstellbarer Nachlaufwalze zur Einstellung der Arbeitstiefe der Bodenbearbeitungswerkzeuge der Kreiselegge.

Fig. 3 - Die erfindungsgemäße Anordnung der Werkzeugkreisel in dem Kastenbalkenboden, ausschnittweise im Längsschnitt in der Ansicht III - III und in vergrößerter Darstellung.

Fig. 4 - Die Draufsicht auf den Kastenbalkenboden im Ausschnitt und in vergrößerter Darstellung.

Fig. 5 - Die vergrößerte Darstellung der Anordnung eines Werkzeugkreisels im Kastenbalken gemäß der Darstellung in Fig. 3.

Fig. 6 - Eine andere Befestigung der Zinken an den Werkzeugträgern gemäß Fig. 3 in gleicher Darstellungsweise wie in Fig. 3.

Fig. 7 - Eine weitere erfindungsgemäße Anordnung der Werkzeugträger im Kastenbalkenboden in der Ansicht VII - VII.

Fig. 8 - Die Anordnung der Stirnräder auf den Werkzeugkreiseln in der Draufsicht, entsprechend Fig. 7.

Fig. 9 - Eine vergrößerte Darstellung des Werkzeugkreisels gemäß Fig. 7, jedoch mit einem anders ausgebildeten Lager.

Fig. 10 - Eine weitere erfindungsgemäße Ausbildung und Lagerung der Werkzeugträger im Kastenbalkenboden, in ausschnittweiser Schnittdarstellung und in vergrößertem Maßstab.

Fig. 11 - Eine andere erfindungsgemäße Ausbildung und Lagerung der Werkzeugträger im Kastenbalkenboden.

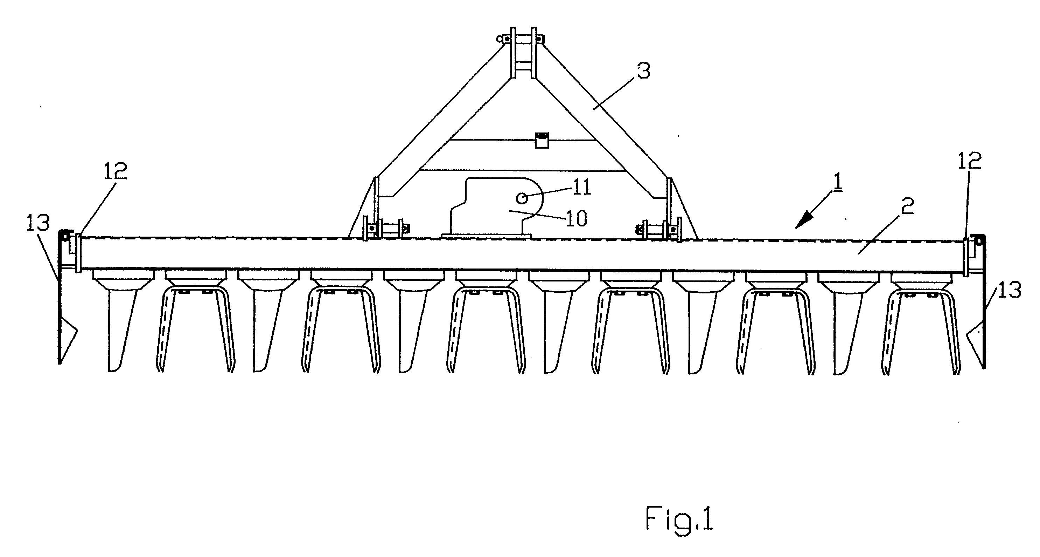

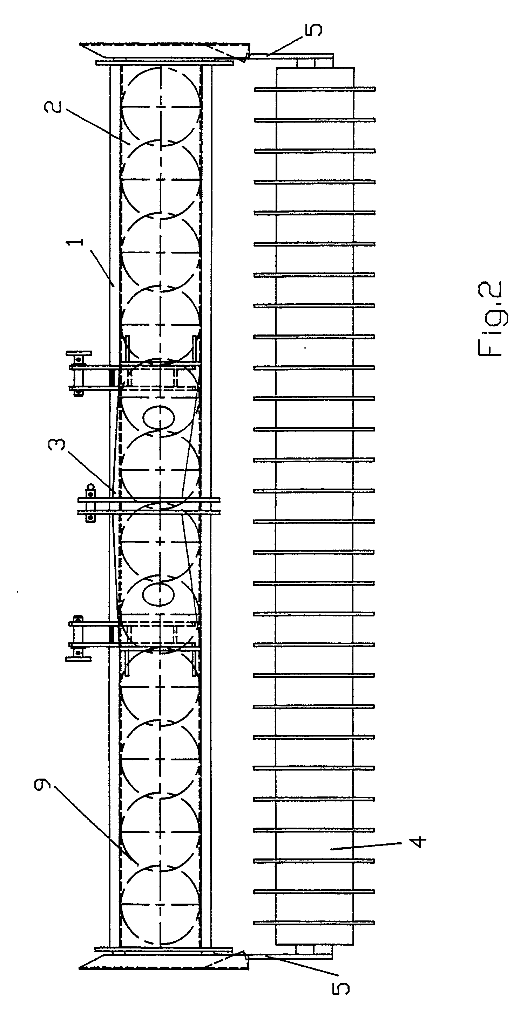

Die Kreiselegge (1) gemäß den Fig. 1 und 2 weist den Kastenbalken (2) auf. Auf der Oberseite des Kastenbalkens (2) ist der Dreipunktanbaubock (3) für den Anschluß der Kreiselegge (1) an den Dreipunktkraftheber eines Traktors angeordnet. Hinter der Kreiselegge (1) befindet sich die Nachlaufwalze (4). Diese Nachlaufwalze (4) weist an ihren beiden äußeren Enden die Tragarme (5) auf, mit welchen sie an den Stirnseiten des Kastenbalkens (2) der Kreiselegge (1) angelenkt ist. Über bekannte und daher nicht näher dargestellten Mitteln ist die Nachlaufwalze (4) gegenüber der Kreiselegge (1) in der Höhe verstellbar und gegenüber dem Kastenbalken (2) einstellbar.

In dem Kastenbalken (3) sind die Werkzeugkreisel (6) gelagert, wie später noch näher erläutert wird. Die Werkzeugkreisel (6) bestehen jeweils aus den topfförmigen Werkzeugträgern (7), den als Bodenbearbeitungswerkzeuge ausgebildeten Zinken (8) und einem jeweils auf dem Werkzeugträger (7) befestigten Stirnrad. Einander benachbarte Werkzeugkreisel (6) werden in entgegengesetztem Drehsinn rotierend durch das sich im Kastenbalken (2) befindlichen Stirnradgetriebe (9) angetrieben. Dieses Stirnradgetriebe (9) steht mit dem am Kastenbalken (2) befestigten Zentralgetriebe (10) in Antriebsverbindung. An die Anschlußwelle (11) des Zentralgetriebes (10) wird eine Gelenkwelle angeschlossen, die mit der Zapfwelle des die Kreiselegge (1) ziehenden Traktors verbunden wird. So sind also die Werkzeugkreisel (6) und die daran befindlichen Zinken (8) über die Zapfwelle eines die Kreiselegge (1) ziehenden Traktors antreibbar. Durch die Zinken (8), welche rotierend den Boden bearbeiten, kann eine Saatbett- oder eine Grundbodenbearbeitung durchgeführt werden. An den seitlichen Enden (12) des Kastenbalkens (2) befinden sich die Seitenschilde (13), die eine seitliche Verlagerung der Erde außerhalb des Arbeitsbereiches der Kreiselegge (1) verhindern.

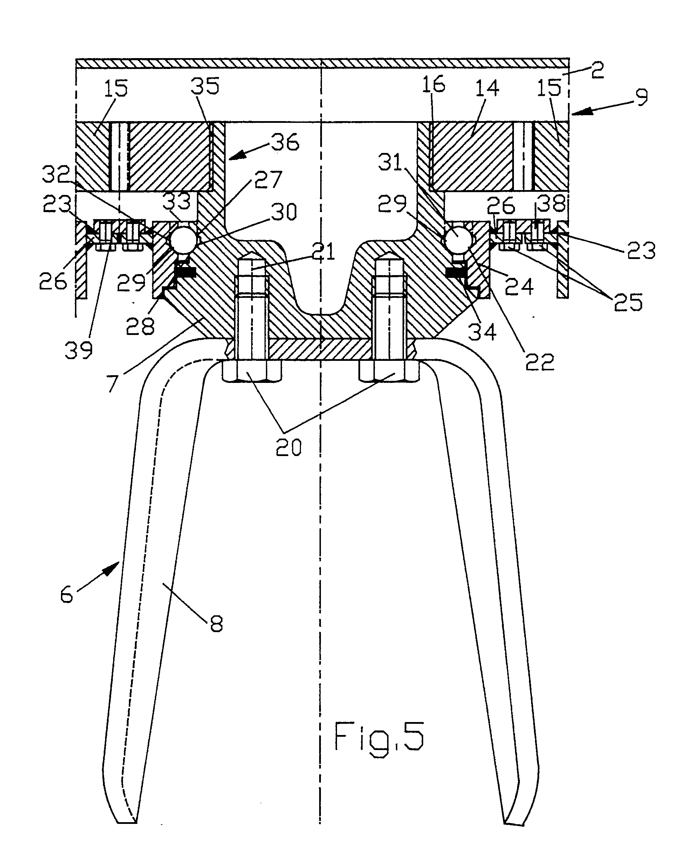

In dem Kastenbalken (2) befindet sich das Stirnradgetriebe (9), wie die Fig. 2 bis 5 zeigen, welches aus den auf den Werkzeugträgern (7) befestigten Stirnrädern (14,15) besteht. Die Stirnräder (14,15) sind auf den Werkzeugträgern (7) mittels der Gewinde (16,17) aufgeschraubt. Der Werkzeugkreisel (6) dreht sich in der Draufsicht gesehen in Pfeilrichtung (18), während der Werkzeugkreisel (6') sich in Pfeilrichtung (19) dreht. D.h. , daß die einander benachbarten Werkzeugkreisel (6,6') im entgegengesetzten Drehsinn zueinander rotieren. Um überhaupt einen entgegengesetzten Drehsinn der Werkzeugkreisel (6,6') zu erreichen, d.h. einen ordnungsgemäßen Antrieb der Werkzeugkreisel (6, 6') zu gewährleisten, ist das Gewinde (16) als Linksgewinde ausgebildet, während das Gewinde (17) des Werkzeugkreisels (6') als Rechtsgewinde ausgebildet ist. Somit schrauben sich die Stirnräder (14,15) automatisch beim Antrieb der Werkzeugkreisel (6,6') fest. An den Werkzeugkreiseln (6,6') sind die als Doppelzinken ausgebildeten Zinken (8,8) mittels der Schrauben (20) befestigt. Hierzu befinden sich in den Werkzeugträgern (7) die als Sacklöcher (21) ausgebildeten Befestigungselemente, in welchen die Schrauben (20) zur Befestigung der Zinken (8,8'), an den Werkzeugträgern (7) angeschraubt werden.

Die Werkzeugträger (7) sind topfförmig ausgebildet, und nur mittels eines einzigen Lagers (22) in dem Kastenbalken (2) gelagert. Dieses Lager (22) befindet sich in einer einzigen Ebene. Das einzige Lager (22) ist hierbei an dem Kastenbalkenboden (23) des Kastenbalkens (2) befestigt, d.h., der Lageraußenring (24) ist mittels der Schrauben (25) an dem Kastenbalkenboden (23) mit Hilfe der an dem Lageraußenring (24) angeschweißten Anschweißenden (26) angeschraubt. Der Lagerinnenring (27) befindet sich auf der Außenseite (28) des topfförmigen Werkzeugträgers (7) des Werkzeugkreisels (6 bzw. 6') und ist somit im Werkzeugträger (7) integriert. Er wird von der um den Werkzeugträger (7) umlaufenden, als Rille (29) ausgebildeten Rollbahn (30) für die als Kugeln (31) ausgebildeten Walzkörper gebildet. Der Lageraußenring (24) weist die Rollbahn (32) für die Wälzkörper (31) auf. Das Lager (22) ist als Vierpunktlager ausgebildet, wobei die Rollbahnen (30,32) aus zwei zusammenlaufenden Kreisbögen bestehen. so daß die Kugeln (31) diese an vier Punkten berühren. Das Lager (22) ist derart ausgebildet, daß sich im Bereich der Rollbahnen (30,32) zwischen dem Lagerinnenring (27) und dem Lageraußenring (24) eine Aussparung (33) befindet, durch welche die Kugeln (31) für das einzige Lager (22) eingefüllt werden. Diese Aussparung (33) ist zur sicheren Anordnung der Kugeln (31) im Lager (22) so ausgebildet, daß die Aussparung (33) einen geringfügig kleineren Durchmesser als die Kugeln (31) aufweist, wobei die Kugeln (31) dann durch diese Aussparung (33) in die Rollbahnen (30,32) des Lagers (22) gepreßt werden. Es ist aber auch möglich, diese Aussparung (33) so auszubilden, daß die Öffnung der Aussparung (33) , durch welche die Kugeln (31) eingefüllt werden, mittels eines Stopfens zur sicheren Anordnung der Kugeln (31) im Lager (22) verschlossen wird. Die Aussparung (33) zur Einfüllung der Kugeln (31) in das Lager (22) befindet sich jeweils in der unbelasteten Zone der Rollbahnen (30,32) des Lagers (22), so daß eine einwandfreie Funktion des Lagers gewährleistet ist. Um den Austritt von sich im Kastenbalken (2) befindlichen Schmiermitteln zu verhindern und gleichzeitig eine Abdichtung gegen von außen in das Lager (22) eindringenden Schmutz etc. sicherzustellen, ist an jedem Lager (22) der einzelnen Werkzeugträger (7) die umlaufende Dichtung (34) vorgesehen. Die Lauffläche für diese Dichtung (34) ist im Lageraußenring (24) integriert.

Die Befestigung der als Doppelzinken (8 bzw. 8') ausgebildeten Bodenbearbeitungswerkzeuge erfolgt mittels der Schrauben (20) an dem topfförmig ausgebildeten, auf der Außenseite (35) im oberen Bereich (36) ein umlaufendes Gewinde (16 bzw. 17) aufweisenden Werkzeugträger (7). Die Zinken (8 bzw. 8') sind an ihrer oberen Berührungsfläche (37) mit dem Werkzeugträger (7) ballig ausgebildet.

Die Montage der Werkzeugkreisel (6 bzw. 6') in dem Kastenbalken (2) erfolgt in der Weise, daß der Lageraußenring (24), der Werkzeugträger (7) mit den Zinken (8 bzw. 8') und das auf dem Werkzeugträger (7) angeordnete Stirnrad (14 bzw. 15) eine Montageeinheit bilden, die von unten durch sich im Kastenbalkenboden (23) befindliche Öffnungen in den Kastenbalken (2) eingesetzt werden. Die Montage dieser aus den einzelnen Bauteilen bestehenden Montageeinheit erfolgt in der Weise, daß zunächst die Dichtung (34) in den Werkzeugträger (7) eingesetzt wird, bevor dann der Lageraußenring (24) von oben über den topfförmigen Werkzeugträger (7) bis in seine entsprechende Position gestülpt wird. Nun werden die Kugeln (31) durch die Aussparung (33) in die von den Rollbahnen (30,32) gebildete Rille (29) eingefüllt und es entsteht das funktionsfähige Kugellager (22). Damit dieses einzige Lager (22) auch die auf das Lager (22) wirkenden Kräfte gut aufnehmen kann, weist dieses Lager (22) einen großen Durchmesser auf. Nun wird das Stirnrad (14 bzw. 15) in der Weise, wie beispielsweise eine Mutter auf einen Schraubbolzen aufgeschraubt wird, auf den topfförmigen Werkzeugträger (7) aufgeschraubt. Da der Antrieb banachbarter Werkzeugkreisel (6, 6') im entgegengesetzten Drehsinn erfolgt, sind die nebeneinander angeordneten Werkzeugträger (7) abwechselnd mit Rechts- und Linksgewinde (16 bzw.17) ausgerüstet. Hierdurch wird erreicht, daß sich die Stirnräder (14 bzw. 15) beim Antrieb der Werkzeugkreisel (6 bzw. 6') automatisch festschrauben. Zur einfachen Montage dieser Stirnräder (14 bzw. 15) auf den jeweiligen Werkzeugträgern (7), wobei die einzelnen, nebeneinander angeordneten, an den Werkzeugträgern (7) befestigten Zinken (8 bzw. 8') eine genau definierte Zinkenstellung zueinander aufweisen müssen, um eine ordnungsgemäße Bodenbearbeitung zu gewährleisten, weist sowohl das jeweilige Stirnrad (14 bzw. 15) als auch der entsprechende Werkzeugträger (29) ein Gewinde (16 bzw. 17) mit genau definiertem Einlauf auf, so daß sich die nebeneinander angeordneten Werkzeugkreisel (6,6') derart montieren lassen, daß die Zinken (8 bzw. 8') eine genau definierte Stellung zueinander einnehmen.

Diese vormontierte, aus den einzelnen Bauteilen bestehende Montageeinheit wird nun von unten in den Kastenbalken (2) mit der entsprechenden Zinkenstellung der Zinken (8,8') benachbarter Werkzeugkreisel (6,6') eingesetzt. Um nun einen sicheren und genauen Antrieb der Werkzeugträger (7) zu gewährleisten, wird diese Montageeinheit nun durch die an den Anschweißenden (26) des Lageraußenringes (24) sich befindlichen Zentrierungselementen (38), welche mit an dem Kastenbalkenboden (23) angeordneten Gegenzentrierungselementen (39) zusammenwirken, einjustiert und mittels der Schrauben (25) am Kastenbalkenboden (23) des Kastenbalkens (2) befestigt. Da es auch ebenfalls notwendig ist, daß die miteinander in Wirkverbindung stehenden Stirnräder (14 bzw. 15) eine genau definierte Stellung zueinander einnehmen müssen, sind auf den Stirnrädern (14 bzw. 15) entsprechende Markierungen vorgesehen.

Dadurch, daß das einzige Lager (22) in dem Werkzeugträger (7) und in dem am Kastenbalkenboden (23) angeschraubten Lageraußenring (24) und somit am Kastenbalkenboden (23) unmittelbar integriert ist, wird eine besonders einfache Lagerung der einzelnen, nebeneinander angeordneten Werkzeugkreisel (6 bzw. 6') einer Kreiselegge geschaffen.

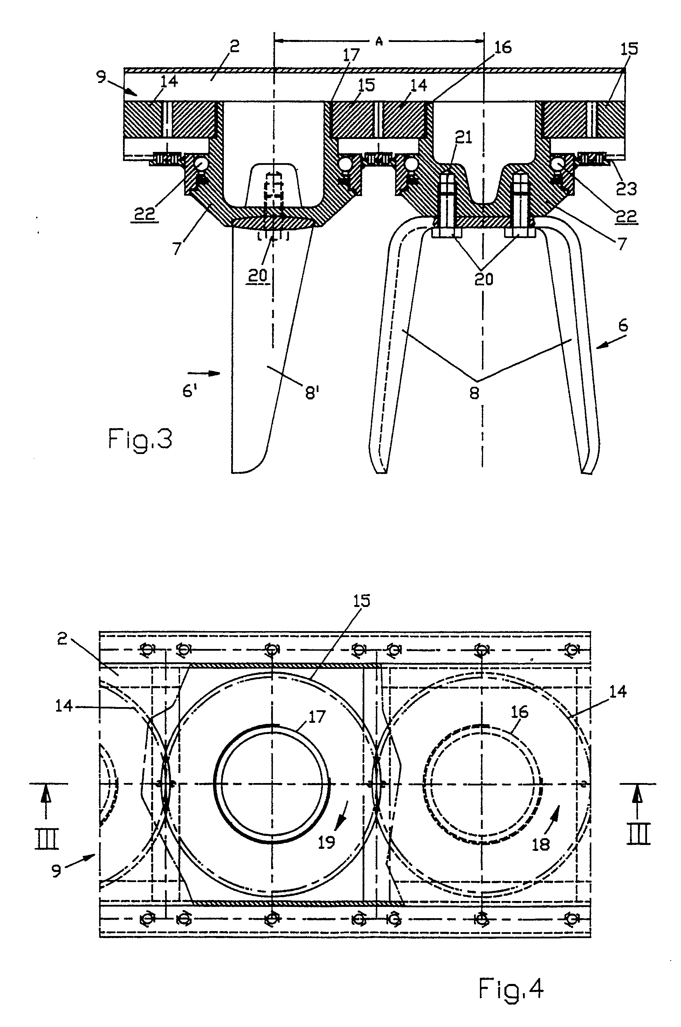

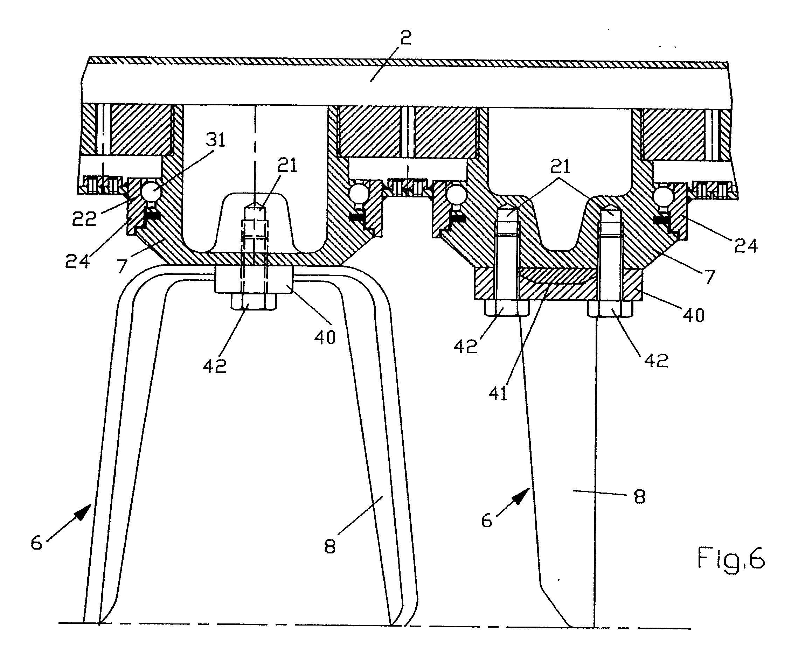

Die Fig. 6 unterscheidet sich nur durch die Anordnung der an dem Werkzeugträger (7) mittels des Klemmstückes (40) befes tigten Doppelzinken (8 bzw. 8') von den Werkzeugkreiseln (6 bzw. 6') gemäß der Figuren 3 bis 5. Dieses Klemmstück (40) weist die Aussparung (41) auf, die der Form des Doppelzinkens (8 bzw. 8') in diesem Bereich entspricht. Über die beiden Schrauben (42) ist dieses Klemmstück (40) an dem Werkzeugträger (7) angeschraubt.

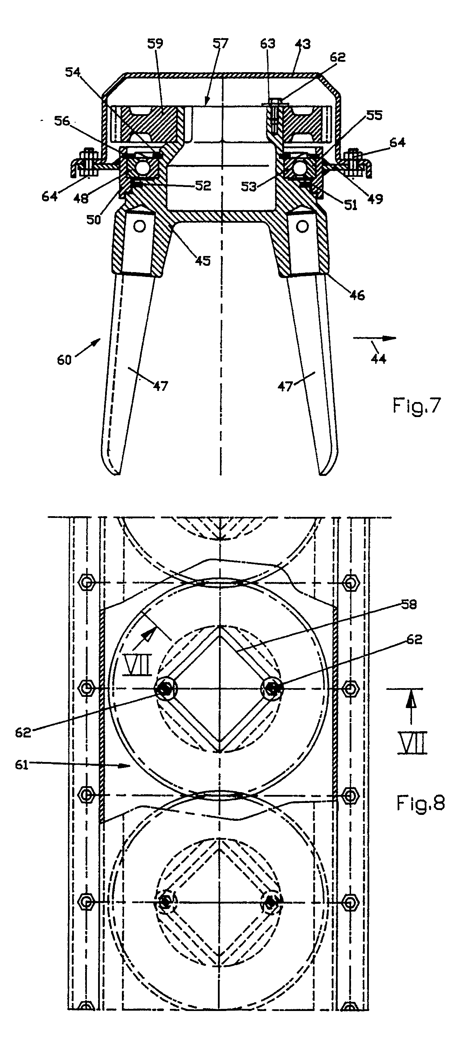

Die Figur 7 zeigt in Schnittdarstellung die Ansicht des Kastenbalkens (43) quer zur Fahrtrichtung (44). Der Werkzeugträger (45) ist ebenfalls topfförmig ausgebildet, wobei an der Bodenweite (46) die Einzelzinken (47) unmittelbar an dem Werkzeugträger (45) befestigt sind. Der Werkzeugträger (45) ist mittels des einzigen Lagers (48) in dem Kastenbalkenboden (49) des Kastenbalken (43) gelagert, wobei sich das Lager (48) in einer einzigen Ebene befindet. Hierbei ist das Lager (48) unmittelbar an dem Werkzeugträger (45) befestigt. Dieses Lager (49) ist als separates, zwischen dem Werkzeugträger (45) und dem Kastenbalkenboden (49) angeordnetes Kugellager ausgebildet und weist zur Aufnahme der auftretenden Kräfte einen großen Durchmesser auf. Zur Aufnahme des Lagers (48) ist jeweils der Lagerflansch (50) in dem Kastenbalkenboden (49) eingeschweißt. In diesem Lagerflansch (50) ist die Lauffläche (51) für die in dem Werkzeugträger (45) angeordnete Dichtung (52) integriert. Der Lagerinnenring (53) stützt sich an dem Werkzeugträger (45) ab, wobei der Lagerinnenring (53) des Lagers (48) mittels des Seegerringes (54) am Werkzeugträger (45) gesichert wird. Der Lageraußenring (55) des Lagers (48) stützt sich in dem Lagerflansch (50) ab, wobei hier die axiale Sicherung mittels des Seegerringes (56) erreicht wird. Die jedem Lager (48) zugeordnete Dichtung (52) verhindert den Austritt von sich im Kastenbalken (43) befindlichen Schmiermitteln und stellt gleichzeitig die Abdichtung gegen von außen eindringenden Schmutz etc. dar.

Der topfförmige Werkzeugtrager (45) weist auf seiner Oberseite (57) das Vierkantprofil (58) auf, welches zur drehfesten Aufnahme des Stirnrades (59) eines jeden Werkzeugkreisels (60) des Stirnradgetriebes (61) dient. Die beiden Schrauben (62) sind als Klemmverbindung (63) ausgebildet und sichern jeweils das Stirnrad (59) auf dem Vierkantprofil (58) des Werkzeugträgers (45). Mittels der Schrauben (64) ist der Kastenbalkenboden (49) an dem Kastenbalken (43) angeschraubt. Die Montage der einzelnen, nebeneinander angeordneten Werkzeugkreisel (60) an dem Kastenbalkenboden (49) wird folgendermaßen durchgeführt:

Zunächst wird das Lager (48) in den am Kastenbalkenboden (49) eingeschweißten Lagerflansch (50) eingesetzt und mittels des Seegerringes (56) gesichert. Nun wird der die Dichtung (52) aufweisende Werkzeugträger (45) von unten in den Kastenbalkenboden (49) eingesetzt, wobei der Lagerinnenring (53) mit dem Werkzeugträger (45) zusammenwirkt. Anschließend wird der Seegerring (54) an dem Werkzeugträger (45) montiert, so daß alle Bauteile eindeutig befestigt sind. Bevor nun das Stirnrad (59) montiert wird, werden die Werkzeugträger (45) benachbarter Werkzeugkreisel (60) in entsprechender Weise jeweils versetzt zueinander angeordnet. Nachdem nun das Stirnrad (59) eingesetzt ist, erfolgt eine Sicherung des Stirnrades (59) auf dem Werkzeugträger (45), in der Weise, daß die aus jeweils einer Schraube (62) und einer Scheibe bestehenden Klemmverbindungen (63) in dem Werkzeugträger eingeschraubt werden.

Auch bei dieser Ausführungsform werden die einzelnen, nebeneinander angeordneten Werkzeugkreisel (60) über das Stirnradgetriebe (61) im entgegengesetzten Drehsinn rotierend angetrieben.

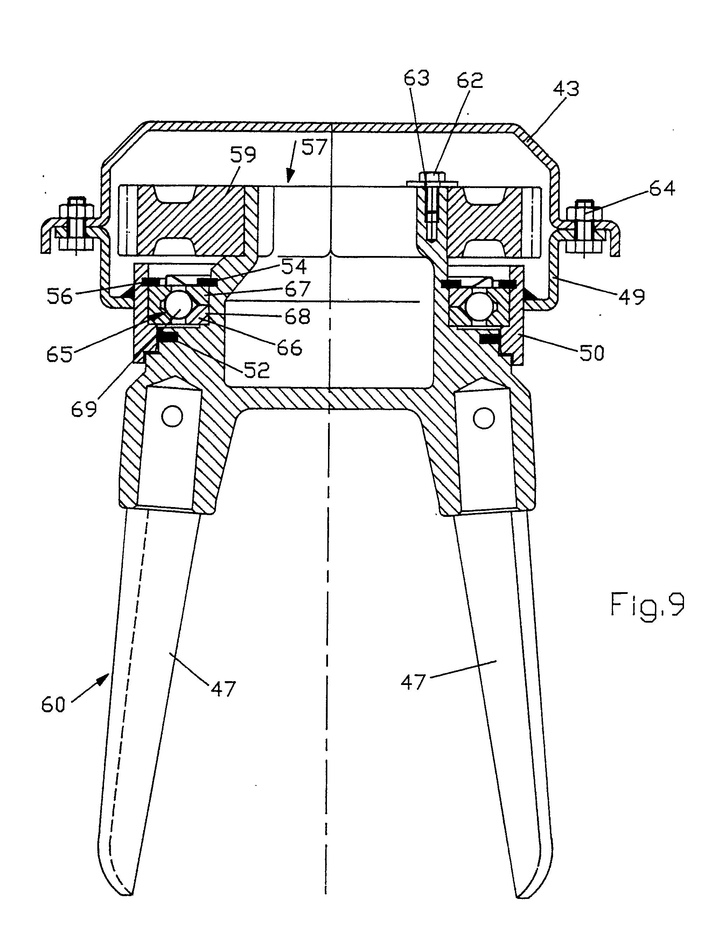

Die Fig. 9 unterscheidet sich nur durch eine andersartig ausgebildete Lagerung des Werkzeugträgers (45). Hierbei ist das Lager (48) gemäß Fig. 7 durch das Lager (65) ersetzt worden. Dieses als Vierpunktlager ausgebildete Lager (65), weist den Lagerinnenring (66) auf, der aus den beiden in horizontaler Ebene trennbaren Lagerhälften (67,68) besteht. Durch die trennbare Ausbildung des Lagerinnenringes (66) des Lagers (65) läßt sich zur Montage der Kugeln (69) die Lagerhälfte (67) abnehmen und nach ihrer Montage wieder einsetzen. Die Sicherung dieses Lagers (65) an dem Werkzeugträger (45) erfolgt in identischer Weise wie bei dem Lager (48) gemäß Fig. 7.

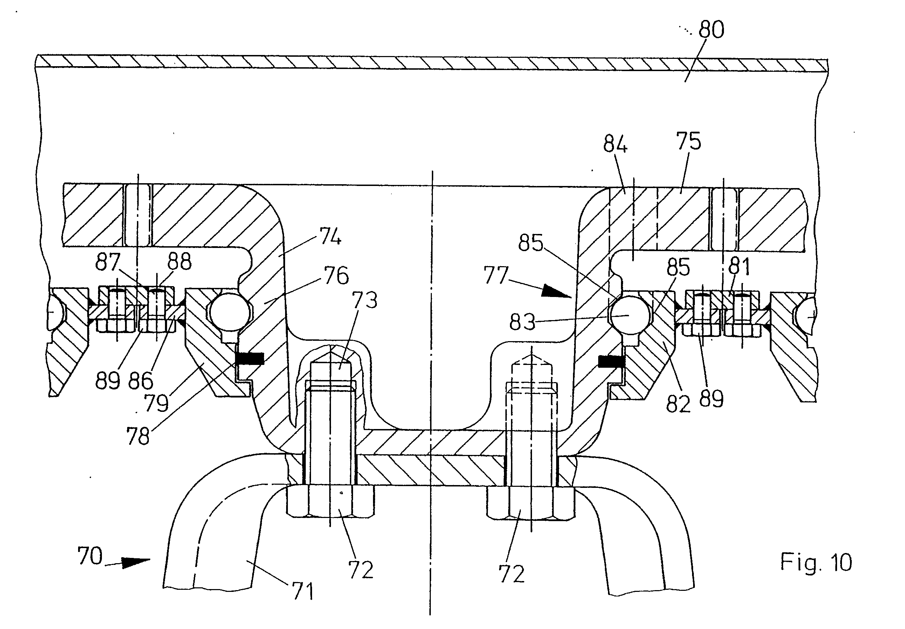

Die Fig. 10 zeigt eine weitere Möglichkeit der Ausbildung des Antriebes für die nebeneinander angeordneten Werkzeugkreisel (70) einer Kreiselegge. Die Werkzeugkreisel (70) bestehen aus den als Doppelzinken ausgebildeten Zinken (71), die mittels der Schrauben (72) an den die Sacklöcher (73) aufweisenden, topfartig ausgebildeten Werkzeugträgern (74) angeschraubt sind. Bei der Ausbildung des Antriebs für die Werkzeugkreisel (70) gemäß Fig. 10, bestehen der Werkzeugträger (74), das als Stirnrad (75) ausgebildete Antriebsrad und das Innenteil (76), also der Lagerinnenring des einzigen Lagers (77) aus einem Stück. Bei dieser einstückigen Ausbildung kann es sich beispielsweise um ein Gußteil oder um ein Blechformteil oder aber um ein Schmiedeteil handeln. Bei der Herstellung aus einem Gußteil wird die Verzahnung für das Stirnrad (75) zunächst als Grobverzahnung gegossen und anschließend nachbehandelt. Wird dieses Teil als Blechformteil hergestellt, ist es beispielsweise möglich, die Verzahnung für das Stirnrad (75) als gerollte Verzahnung herzustellen, wobei bei der Herstellung dieses einstückigen Teiles als Schmiedeteil die Verzahnung für das Stirnrad (75) beispielsweise geschlagen wird.

Die Montage dieses einstückig ausgebildeten Antriebsteiles für den Werkzeugkreisel (70) wird folgendermaßen durchgeführt:

Zunächst wird die Dichtung (78) in den topfförmig ausgebildeten Werkzeugträger (74) eingesetzt und dann von oben in den Lagerflansch (79) eingeführt. Dieser Lagerflansch (79) ist an dem Kastenbalkenboden (81) befestigt und weist die Lauffläche für die Dichtung (78) und den Lageraußenring (82) für das Lager (77) auf. Dieses Lager (77) ist als Vierpunktlager ausgebildet. Nachdem nun dieses aus dem Werkzeugträger (74), dem Antriebsrad (75) und dem Innenteil (76) des Lagers (77) bestehende Bauteil in diesem Lagerflansch (79) eingeführt ist, werden Kugeln (83) für das Lager (77) durch die sich im Stirnrad (75) befindliche Einfüllöffnung (84) in die Rille (85) des Lagers (77) eingefüllt, bis die rings um den Werkzeugträger (74) umlaufende Rille (85) ganz mit Kugeln (83) gefüllt ist. Durch die Einfüllung der Kugeln (83) in diese Rille (85) erfolgt die axiale Sicherung des einstückig hergestellten, den Werkzeugträger (74), das Antriebsrad (75) und das Innenteil (76) des einzigen Lagers (77) aufweisenden Bauteiles in dem Lagerflansch (79). Hiernach wird nun diese vormontierte Baueinheit des Werkzeugkreisels (70) durch die sich im Kastenbalkenboden (81) befindliche Öffnung von unten in den Kastenbalken (80) eingesetzt. Damit nun diese Werkzeugkreisel (70), bei denen die jeweils benachbarten Werkzeugkreisel (70) versetzt zueinander angeordnet sind, ordnungsgemäß in dem Kastenbalkenboden (81) montiert werden, sind die jeweils an dem Lagerflansch (79) angeschweißten Anschweißenden (86), mit denen der jeweilige Lagerflansch (7)) an den Kastenbalkenboden (81) angeschraubt wird, mit den Zentrierungselementen (87) ausgerüstet, welche mit den sich in dem Kastenbalkenboden (81) befindlichen Gegenzentrierungselementen (88) zusammenwirken. Hiernach erfolgt nun mittels der Schrauben (89) die Befestigung der Werkzeugträger (70) an dem Kastenbalkenboden (81) der Kreiselegge.

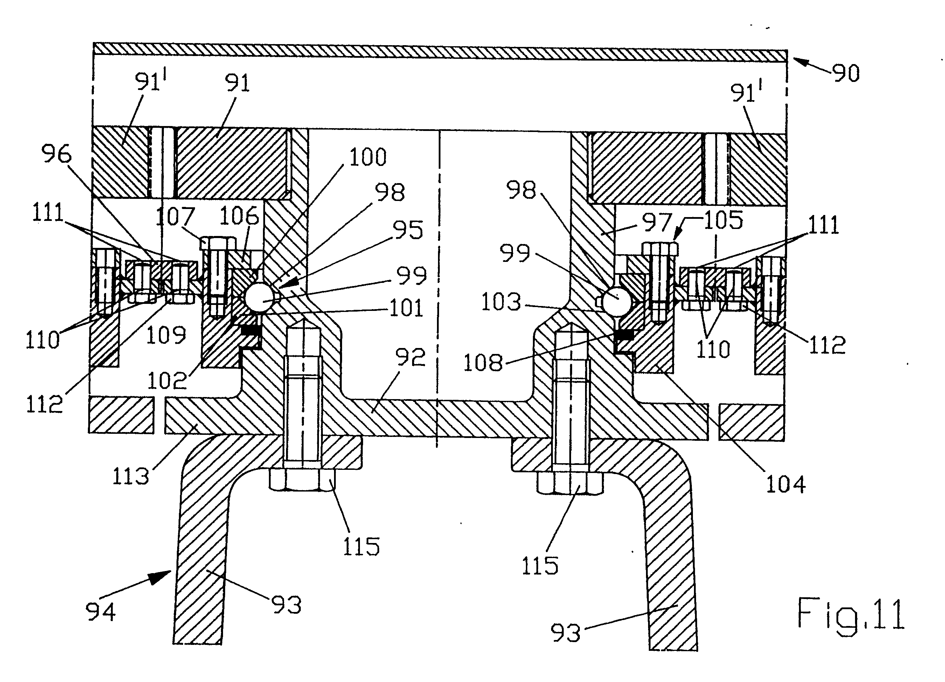

Die Fig. 11 zeigt die Schnittdarstellung des Kastenbalkens (90), in dem die Stirnräder (91,91′) nebeneinander auf den topfförmig ausgebildeten Werkzeugträgern (92) aufgeschraubt sind. Das Stirnrad (91), der Werkzeugträger (92) und die als Bodenbearbeitungswerkzeuge ausgebildeten Zinken (93) bilden den jeweiligen Werkzeugkreisel (94). Diese Werkzeugkreisel (94) sind mittels des einzigen, als Vierpunktlager ausgebildeten Lagers (95) in dem Kastenbalkenboden (96) des Kastenbalken (90) drehbar gelagert. Auf der Außenseite (97) des topfförmigen Werkzeugträgers (92) ist die umlaufende, als Rollbahn (98) für die als Kugel (99) ausgebildeten Wälzkörper ausgebildete Lagerrille zur Aufnahme der Kugeln (99) des als Kugellager ausgebildeten Lagers (95) integriert. Die beiden, in horizontaler Ebene teilbaren Lagerringhälften (100,101) bilden den Lageraußenring (102), wobei der Lagerinnenring (103) des Lagers (95) in der Außenseite (97) des topfförmigen Werkzeugträgers (92) integriert ist. Die beiden teilbaren, den Lageraußenring (102) bildenden Lagerringhälften (100,101) stützen sich in dem Lagerflansch (104) ab. Eine axiale Sicherung des Lageraußenringes (102) erfolgt mittels des als Klemmverbindung (105) dienenden Ringes (106), der mit Hilfe der Schrauben (107) an dem Lagerflansch (104) befestigt ist. Die in dem Lagerflansch (104) eingesetzte Dichtung (108) übernimmt die Abdichtung des Kastenbalkens (90) nach unten und verhindert ein Austreten von sich in dem Inneren des Kastenbalkens (90) befindlichen Schmiermitteln sowie das Eintreten von Staub- und Schmutzteilchen in den Kastenbalken (90).

Der Lagerflansch (104) weist jeweils die Anschweißenden (109) auf, mit denen er in dem Kastenbalkenboden (96) befestigt wird. Damit nun eine ordnungsgemäße Befestigung der Lagerflansche (104) in dem Kastenbalkenboden (96) erfolgen kann, weisen die Anschweißenden (109) die Zentrierungselemente (110) auf. Diese Zentrierungselemente (110) wirken mit den sich in dem Kastenbalkenboden (96) befindlichen, als Bohrungen ausgebildeten Gegenzentrierungselement (111) zusammen. Mit den Schrauben (112) werden die Lagerflansche (104) an dem Kastenbalkenboden (96) verschraubt.

Zur Vermeidung des Einklemmens von Steinen zwischen den einzelnen, nebeneinander angeordneten Werkzeugträgern (92) weisen diese in ihrem unteren Bereich den kreisrunden, tellerförmigen Abschluß (113) auf. In die Sacklöcher (114) des Werkzeugträgers (92) werden die Schrauben (115) zur Befestigung der Zinken (93) angeschraubt. Die Zinken (93) sind jeweils mittels zweier Schrauben (115) an dem Werkzeugträger (92) befestigt.

Die Montage der Werkzeugkreisel (94) in dem Kastenbalken (90) wird folgender Maßen durchgeführt:

Zunächst wird die Dichtung (108) in den Lagerflansch (104) eingesetzt, bevor dann die untere Lagerringhälfte (101) des Lageraußenringes (102) in dem Lagerflansch (104) montiert wird. Als nächstes wird der Lagerflansch (104) von oben über den topfförmigen Werkzeugträger (92) gestülpt und die Kugeln (99) in die Rollbahn (98) eingefüllt. Die endgültige Montage des Lagers (95) erfolgt durch das Aufsetzen der oberen Lagerringhälfte (100) und das Aufsetzen und Verschrauben des als Klemmverbindung (105) dienenden Ringes (106). Hiernach wird das Stirnrad (91) auf den Werkzeugträger (92) aufgeschraubt und die Zinken (93) werden entweder jetzt oder nach der Montage des Werkzeugträgers (93) in dem Kastenbalkenboden (96) mittels der Schrauben (115) an dem Werkzeugträger (92) befestigt. Die Montage der vormontierten Baueinheit erfolgt nun von unten durch eine entsprechende Öffnung in dem Kastenbalkenboden (96). Nachdem die Zentrierungselemente (110) ordnungsgemäß mit den Gegenzentrierungselementen (111) zusammenwirken, erfolgt die Verschraubung an dem Kastenbalkenboden (96) mittels der Schrauben (112).

**Ansprüche**

1. Zapfwellengetriebene Kreiselegge mit einem sich quer zur Fahrtrichtung erstreckenden Kastenbalken, in dem mehrere, jeweils aus Werkzeugträger, Antriebsrad und Bodenbearbeitungswerkzeug bestehende Werkzeugkreisel nebeneinander angeordnet sind, dadurch gekennzeichnet, daß die Werkzeugkreisel (6,6´,60,70,94) mittels Lager (22,48,65,77,95) drehbar angeordnet sind und einander benachbarte Werkzeugkreisel (6,6´,60,70,94) über ein Stirnradgetriebe (9,61,75,91) im entgegengesetzten Drehsinn rotierend angetrieben sind.

2. Kreiselegge nach Anspruch 1, dadurch gekennzeichnet, daß jeder Werkzeugkreisel (6,6´,60,70,94) mittels eines einzigen Lagers (22,48,65,77,95) und/oder Lagerringes (24,48,65,82,102) in dem Kastenbalken (2,43,80,90) gelagert ist, welches(er) sich in einer einzigen Ebene befindet.

3. Kreiselegge nach einem oder mehreren der vorstehenden Ansprüche, dadurch gekennzeichnet, daß das einzige Lager (22,48,65,77,94) an dem Kastenbalkenboden (23,49,81,96) befestigt ist.

4. Kreiselegge nach Anspruch 1, dadurch gekennzeichnet, daß das Lager (22,48,65,77,95) unmittelbar an und/oder in dem Außenring (28,97) des Werkzeugträgers (7,45,74,92) angeordnet ist.

5. Kreiselegge nach einem oder mehreren der vorstehenden Ansprüche, dadurch gekennzeichnet, daß das Lager (22,48,65,77,95) einen großen Durchmesser aufweist, der mindestens einem Drittel des Durchmessers des Zinkenarbeitsbereiches und/oder der Hälfte des Drehachsenabstandes (A) der einander benachbarten Werkzeugkreisel (6,6´,60,60,94) entspricht, jedoch kleiner als dieser Achsabstand (A) ist.

6. Kreiselegge nach einem oder mehreren der vorstehenden Ansprüche, wobei der Werkzeugkreisel zumindest einen Werkzeugträger und in Richtung des Bodens gerichtete Zinken aufweist, dadurch gekennzeichnet, daß der Werkzeugkreisel (6,6´,60,70,94) unmittelbar über den Werkzeugträger (7,45,74,92) im Kastenbalken gelagert ist.

7. Kreiselegge nach einem oder mehreren der vorstehenden Ansprüche, dadurch gekennzeichnet, daß der Werkzeugträger (7,45,74,92) topfförmig ausgebildet ist, daß an der Bodenseite oder im unteren zylindrischen Bereich des topfförmigen Werkzeugträgers (7,45,74,92) die Zinken (8,8´,47,71,93) befestigt sind, daß an der Oberseite des topfförmigen Werkzeugträgers (7,45,74,92) das Stirnrad (14,15,59,75,91) des Stirnradgetriebes (9,61,75) befestigt ist, und daß zwischen dem Stirnrad (14,15,59,75,91) und der Zinkenbefestigung (20,42,72,115) das einzige Lager (22,48,65,77,95) angeordnet ist.

8. Kreiselegge nach einem oder mehreren der vorstehenden Ansprüche, dadurch gekennzeichnet, daß sich auf der Außenseite (28,97) des topfförmigen Werkzeugträgers (7,45,74,92) eine umlaufende, als Rollbahn (30,98) für die Wälzkörper (31,69,83,99) ausgebildete Lagerrille (29,85) zur Aufnahme von Kugeln (31,69,83,99) des als Kugellager ausgebildeten Lagers (22,48,65,77,95) befindet, und daß sich in dem Boden (23,49,81,96) des Kastenbalkens (2,43,80,90) ebenfalls für die Lagerung jedes Werkzeugkreisels (6,6´,60,70,94) eine ebenfalls umlaufende Lagerrille (29,85) zur Aufnahme der Kugeln (31,69,83,99) des Kugellagers (22,48,65,77,95) befindet.

9. Kreiselegge nach einem oder mehreren der vorstehenden Ansprüche, dadurch gekennzeichnet, daß sich im Bereich der umlaufenden Rille (29,85) zumindest eine Aussparung (33,84) befindet, durch welche die Kugeln (31,69,83) für das einzige Lager (22,48,65,77) einfüllbar sind, und daß diese Aussparung(en) (33,84) durch einen oder mehrere einsetzbare(n) Stopfen verschließbar ist (sind).

10. Kreiselegge nach einem oder mehreren der vorstehenden Ansprüche, dadurch gekennzeichnet, daß die Aussparung (33,84) zur Einfüllung der Kugeln (31,69,83) sich jeweils in der unbelasteten Zone der Rille (29,85) befindet.

11. Kreiselegge nach einem oder mehreren der vorstehenden Ansprüche, dadurch gekennzeichnet, daß sich die Aussparung (33,84) zur Einfüllung der Kugeln (31,69,83) sich in der Seitenwand des topfförmigen Werkzeugträgers (7,45,74) befindet.

12. Kreiselegge nach einem oder mehreren der vorstehenden Ansprüche, dadurch gekennzeichnet, daß die Aussparung zur Einfüllung der Kugeln (31,69,83) in das Lager (22,48,65,77) sich in der feststehenden Seitenwand der Kreiselwanne befindet.

13. Kreiselegge nach einem oder mehreren der vorstehenden Ansprüche, dadurch gekennzeichnet, daß auf der Außenseite (35) im oberen Bereich (36) des topfförmigen Werkzeugträgers (7, 92) ein umlaufendes Gewinde (16,17) angeordnet ist, daß das Stirnrad (14,15,91) des Stirnradgetriebes (9) jeweils ebenfalls ein Gewinde (16,17) aufweist, welches dem auf dem topfförmigen Werkzeugträger (7,92) aufgebrachten Gewinde (16,17) entspricht, so daß das Stirnrad (14,15,91) auf den topfförmigen Werkzeugträger (7,92) aufschraubbar ist.

14. Kreiselegge nach einem oder mehreren der vorstehenden Ansprüche, dadurch gekennzeichnet, daß die Werkzeugträger (7,92) abwechslend Rechts- und Linksgewinde (16,17) aufweisen, und daß die Stirnräder (14,15,91,91') entsprechend mit Rechts- und Linksgewinde (16,17) versehen sind.

15. Kreiselegge nach einem oder mehreren der vorstehenden Ansprüche, dadurch gekennzeichnet, daß der topfförmige Werkzeugträger (45) auf seiner Oberseite (57) ein Mehrkantprofil, vorzugsweise ein Vierkantprofil (58) zur drehfesten Aufnahme des Stirnrades (59) des Stirnradgetriebes (61) aufweist.

16. Kreiselegge nach einem oder mehreren der vorstehenden Ansprüche, dadurch gekennzeichnet, daß für das Kugellager (22,65,77,95) eine Vierpunktlagerung vorgesehen ist.

17. Kreiselegge nach einem oder mehreren der vorstehenden Ansprüche, dadurch gekennzeichnet, daß das Kugellager (22,48,65,77,95) als sog. Vollkugellager ausgebildet ist.

18. Kreiselegge nach einem oder mehreren der vorstehenden Ansprüche, dadurch gekennzeichnet, daß das Kugellager (22,48,65,77,95) als sog. Käfiglager ausgebildet ist.

19. Kreiselegge nach einem oder mehreren der vorstehenden Ansprüche, dadurch gekennzeichnet, daß das Kugellager (48,65) als separates, zwischen dem Werkzeugträger (45) und dem Kastenbalkenboden (49) angeordnetes Kugellager (48,65) mit großem Durchmesser ausgebildet ist.

20. Kreiselegge nach einem oder mehreren der vorstehenden Ansprüche, dadurch gekennzeichnet, daß einer oder zwei der Lagerringe (67,68,100,101) zur Montage der Kugeln (69,99) innerhalb der Lagerringe (66,67,68,100,101) abnehmbar und/oder einsetzbar ausgebildet ist (sind).

21. Kreiselegge nach einem oder mehreren der vorstehenden Ansprüche, dadurch gekennzeichnet, daß dieser abnehmbare Lagerring (67,68,100,101) dem Werkzeugträger (45,92) zugeordnet ist.

22. Kreiselegge nach einem oder mehreren der vorstehenden Ansprüche, dadurch gekennzeichnet, daß das einzige Lager (22,27,95) in den Werkzeugträger (7,74,92) und den Kastenbalkenboden (23,81,96) unmittelbar integriert ist.

23. Kreiselegge nach einem oder mehreren der vorstehenden Ansprüche, dadurch gekennzeichnet, daß die Zinken (8,8') als Doppelzinken ausgebildet sind und mittels zweier Schrauben (20,42,72) an dem Werkzeugträgerboden des Werkzeugträgers (7) angeschraubt sind, wobei sich in dem Werkzeugträgerboden in einem Abstand voneinander zwei Sacklöcher (21,73) befinden, in welche die Schrauben (20,42,72) zur Befestigung der Zinken (8,8',71) eingeschraubt sind.

24. Kreiselegge nach einem oder mehreren der vorstehenden Ansprüche, dadurch gekennzeichnet, daß die Zinken (47,93) als Einzelzinken ausgebildet sind, die unmittelbar an dem Werkzeugträger (45,92) lösbar befestigt sind.

25. Kreiselegge nach einem oder mehreren der vorstehenden Ansprüche, dadurch gekennzeichnet, daß sowohl das Zahnrad (14,15,91) wie der Werkzeugträger (7,92) ein Gewinde (16,17) mit definiertem Einlauf zur definierten Zinkenstellung aufweisen.

26. Kreiselegge nach einem oder mehreren der vorstehenden Ansprüche, dadurch gekennzeichnet, daß der Lageraußenring (24,55,82,102) an den Kastenbalken (2,49,80,90) angeschraubt wird.

27. Kreiselegge nach einem oder mehreren der vorstehenden Ansprüche, dadurch gekennzeichnet, daß der Lageraußenring (24,55,82,102) unlösbar (durch Schweißen oder Bördeln) mit dem Kastenbalken (2,49,80,90) verbunden ist.

28. Kreiselegge nach einem oder mehreren der vorstehenden Ansprüche, dadurch gekennzeichnet, daß der Werkzeugträger (7,45,74,92) und der Lageraußenring (24,50,55,82,102) als fertiges Lager (22,48,65,77,95) vormontiert werden und als Montageeinheit an den Kastenbalkenboden (23,49,81,96) befestigt oder angeflanscht werden.

29. Kreiselegge nach einem oder mehreren der vorstehenden Ansprüche, dadurch gekennzeichnet, daß an der vorgefertigten Montageeinheit bereits die Zinken (8,8',47,71,93) angeordnet sind.

30. Kreiselegge nach einem oder mehreren der vorstehenden Ansprüche, dadurch gekennzeichnet, daß der Lageraußenring (24,50,55,82,102), der Werkzeugträger (7,45,74,92) mit Zinken (8,8',47,71,93) und das auf dem Werkzeugträger (7,45,74,92) angeordnete Stirnrad (14,15,59,75,91) eine Montageeinheit bilden, die bereits vormontiert ist und als komplette Montageeinheit in den Kastenbalken (2,43,80,90) eingeführt und an den Kastenbalkenboden (23,49,81,96) befestigt, insbesondere mittels Schrauben (25,64,89,112) angeflanscht wird.

31. Kreiselegge nach einem oder mehreren der vorstehenden Ansprüche, dadurch gekennzeichnet, daß die Montageeinheit durch an dem Lageraußenring (24,50,55,82,102) befindlichen Zentrierungselementen (38,64,87,110) in Verbindung mit am Kastenbalkenboden (23,81,96) angeordneten Gegenzentrierungselementen (39,88,111) im Kastenbalken (2,43,80,90) genau justiert wird.

32. Kreiselegge nach einem oder mehreren der vorstehenden Ansprüche, dadurch gekennzeichnet, daß im Kastenbalkenboden (23,49,81,96) Öffnungen vorgesehen sind, durch welche die vormontierten Montageeinheiten von Werkzeugträgern (7,45,74,92), Lageraußenring (24,50,55,82,102) und Stirnrad (14,15,59,75,91) eingeführt werden, und daß diese Öffnungen so bemessen sind, daß die Montageeinheiten von unten in den Kastenbalkenboden (23,49,81,96) hineinschiebend montierbar sind.

33. Kreiselegge nach einem oder mehreren der vorstehenden Ansprüche, dadurch gekennzeichnet, daß jedem den Werkzeugträger (7,45,74,92) im Kastenbalkenboden (23,49,81,90) lagernden Lager (22,48,65,77,95) zumindest eine Dichtung (34,52,78,108) zugeordnet ist, die den Austritt von sich im Kastenbalken (2,43,80,90) befindlichen Schmiermitteln verhindert und gleichzeitig die Dichtung gegen von außen eindringenden Schmutz etc. sicherstellt.

34. Kreiselegge nach einem oder mehreren der vorstehenden Ansprüche, dadurch gekennzeichnet, daß die Dichtung (34,52,78,108) als Kunststoffring ausgebildet ist und vorzugsweise aus einem gschäumten Kunststoffmaterial besteht.

35. Kreiselegge nach einem oder mehreren der vorstehenden Ansprüche, dadurch gekennzeichnet, daß der Kunststoffdichtung (34,52,78 108) eine in den Werkzeugträger (7,45,74,92) und den feststehenden Außenlagerring (24 50,82,102) integrierte Labyrinthdichtung vorgeschaltet ist.

36. Kreiselegge nach einem oder mehreren der vorstehenden Ansprüche, dadurch gekennzeichnet, daß der Werkzeugträger (74), das Antriebsrad (75) und das Innenteil (76) des einzigen Lagers (77) aus einem Stück sind.

37. Kreiselegge nach einem oder mehreren der vorstehenden Ansprüche, dadurch gekennzeichnet, daß das einzige Lager (77) horizontal geteilt ist und vorzugsweise über das Antriebsrad abgestützt und eingestellt wird.

38. Kreiselegge nach einem oder mehreren der vorstehenden Ansprüche, dadurch gekennzeichnet, daß in den Lagerring (24,50,82,102) die Lauffläche der Dichtung (34,52,78,108) integriert ist.

39. Kreiselegge nach einem oder mehreren der vorstehenden Ansprüche, dadurch gekennzeichnet, daß das Antriebsrad (59) mit einer axialen Sicherung (62,63) versehen ist.

40. Kreiselegge nach einem oder mehreren der vorstehenden Ansprüche, dadurch gekennzeichnet, daß der Doppelzinken (8,8',71) am Werkzeugträger (7,74) mittels eines Klemmstückes (40) befestigt ist.

41. Kreiselegge nach einem oder mehreren der vorstehenden Ansprüche, dadurch gekennzeichnet, daß das Klemmstück (40) zumindest eine Aussparung (41) aufweist, die etwa der Form des Doppelzinkens (8,8',71) in diesem Bereich entspricht.

42. Kreiselegge nach einem oder mehreren der vorstehenden Ansprüche, dadurch gekennzeichnet, daß auf der Außenseite (97) des topfförmigen Werkzeugträgers (92) eine umlaufende, als Rollbahn (98) für die Wälzkörper (99) ausgebildete Lagerrille zur Aufnahme von Kugeln (99) des als Kugellager ausgebildeten Lagers (95) integriert ist und das der Lageraußenring (102) aus zwei in horizontaler Ebene teilbaren Lagerringhälften (100,101) besteht.

43. Kreiselegge nach einem oder mehreren der vorstehenden Ansprüche, dadurch gekennzeichnet, daß zumindest eine Hälfte (100) des Lageraußenringes (102) abnehmbar ausgebildet ist.

44. Kreiselegge nach einem oder mehreren der vorstehenden Ansprüche, dadurch gekennzeichnet, daß die eine Hälfte (101) des Lageraußenringes (102) in dem am Kastenbalkenboden (96) zu befestigenden Lagerflansch (104) integriert ist.

45. Kreiselegge nach einem oder mehreren der vorstehenden Ansprüche, dadurch gekennzeichnet, daß die abnehmbar ausgebildete Hälfte (100) des Lageraußenringes (102) in axialer Richtung mittels eines als Klemmverbindung (105) dienenden Ringes (106) gesichert und eingestellt wird.

46. Kreiselegge nach einem oder mehreren der vorstehenden Ansprüche, dadurch gekennzeichnet, daß der Werkzeugträger (92) in seinem unteren Bereich einen kreisrunden, tellerförmigen Abschluß (113) aufweist, an welchen vorzugsweise die Zinken (93) befestigt sind.

47. Kreiselegge nach einem oder mehreren der vorstehenden Ansprüche, dadurch gekennzeichnet, daß an dem Werkzeugträger (92) zwei abgewinkelte, als Bodenbearbeitungswerkzeuge ausgebildete Zinken (93) angeschraubt sind.

Fig.1

EP 0 398 386 A1

Fig.2

EP 0 398 386 A1

Fig.3

Fig.4

Fig.5

Fig.6

EP 0 398 386 A1

Fig.7

Fig.8

Fig.9

EP 0 398 386 A1

Fig. 10

Fig.11

EP 0 398 386 A1

Europäisches Patentamt

**EUROPÄISCHER RECHERCHENBERICHT**

| | EINSCHLÄGIGE DOKUMENTE | | EP 90109621.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - A1 - 3 320 775</u> (VAN DER LELY) * Fig. 2,3,4; Seite 8, Zeilen 15-20 * | 1 | A 01 B 33/08 A 01 B 33/14 |
| A | | 2,6, 14,16, 17,24, 39 | |
| D,A | <u>DE - A1 - 2 538 306</u> (VAN DER LELY) * Fig. 2,14 * | 1,6, 16,17, 24,47 | |
| A | <u>DE - A1 - 2 642 936</u> (VAN DER LELY) * Fig. 2,3 * | 1,6, 16,17, 24,47 | |
| A | <u>GB - A - 2 037 131</u> (AMAZONEN-WERKE) * Fig. 1,4 * | 1,7,24 | |
| A | <u>GB - A - 1 518 316</u> (VAN DER LELY) * Fig. 1,2,4 * | 1,2,3 | RECHERCHIERTE SACHGEBIETE (Int Cl⁵) A 01 B 33/00 A 01 B 35/00 |
| A | <u>GB - A - 2 200 522</u> (DIANA DOWDESWELL) * Zusammenfassung; Seite 4, Zeilen 19-22 * | 1,2,4, 25 | |

Der vorliegende Recherchenbericht wurde für alle Patentansprüche erstellt.

| Recherchenort WIEN | Abschlußdatum der Recherche 11-07-1990 | Prüfer RIEMANN |
|---|---|---|